# EUROPEAN PATENT APPLICATION

(11) **EP 2 475 059 A1**
(43) Date of publication of application: **11.07.2012**
(21) Application number: 12150523.4
(22) Date of filing: 09.01.2012
(51) Int. Cl.: H02J 3/26

(54) **Load balancing for distribution power supply system**

(30) Priority: 10.01.2011 US 987301
(71) Applicant: General Electric Company, Schenectady, NY 12345 (US)
(72) Inventor: Pamulaparthy, Bala Krishna, 500081 Andhra Pradesh (IN); Goli, Viswesh, 500081 Andhra Pradesh (IN)
(74) Representative: Cleary, Fidelma

(57) **Abstract**

Solutions for balancing loads in a distribution power supply system are disclosed. In one embodiment, a load balancing system (100, 200, 300) including: an obtainer (40) for obtaining load data from a plurality of meters (110A, 110B), wherein each meter (110A, 110B) is connected to one of: a first phase (160), a second phase (162), or a third phase (164) of a distribution power supply system; a determinator (50) for determining a balanced load distribution for the first (160), second (162), and third phases (164) of the distribution power supply system based on the load data, wherein the balanced load distribution indicates one of: the first phase (160), the second phase (162), or the third phase (164) for each meter (110A, 110B) to switch connection to; and a transmitter (60) for transmitting balanced load distribution commands including the balanced load distribution to each of the meters(110A, 110B), such that each meter (110A, 110B) switches a phase connection to the distribution power supply system according to the balanced load distribution commands.

## Description

### BACKGROUND OF THE INVENTION

The subject matter disclosed herein relates to solutions for balancing loads within a 3-phase, 4-wire distribution power supply system.

Within a distribution power supply system, a balanced system is one in which voltages and currents are balanced. In electrical terms, at any instant of time, the voltages in each phase should be at the same magnitude and phase displaced by 120 degrees. If the voltages are balanced, then set currents will also be balanced, as the currents are analogous to the voltages.

Although 100% balancing may not be realistically achieved in practical systems, a power supply can be maintained to be near balanced. This provides several advantages, such as, improved transformer efficiency and improved power quality, and avoids excessive voltage drops, energy losses, and feeder overload.

### BRIEF DESCRIPTION OF THE INVENTION

Solutions for balancing loads within a distribution power supply system are disclosed. In one embodiment, a load balancing system comprising: an obtainer for obtaining load data from a plurality of meters, wherein each meter is connected to one of: a first phase, a second phase, or a third phase of a distribution power supply system; a determinator for determining a balanced load distribution for the first, second, and third phases of the distribution power supply system based on the load data, wherein the balanced load distribution indicates one of: the first phase, the second phase, or the third phase for each meter to switch connection to; and a transmitter for transmitting balanced load distribution commands including the balanced load distribution to each of the meters, such that each meter switches a phase connection to the distribution power supply system according to the balanced load distribution commands.

From a first aspect, the present invention resides in a load balancing system comprising: an obtainer for obtaining load data from a plurality of meters, wherein each meter is connected to one of: a first phase, a second phase, or a third phase of a distribution power supply system; a determinator for determining a balanced load distribution for the first, second, and third phases of the distribution power supply system based on the load data, wherein the balanced load distribution indicates one of: the first phase, the second phase, or the third phase for each meter to switch connection to; and a transmitter for transmitting balanced load distribution commands including the balanced load distribution to each of the meters, such that each meter switches a phase connection to the distribution power supply system according to the balanced load distribution commands.

From a second aspect, the present invention resides in a system comprising: a plurality of meters, each meter connected to at least one device; a distribution power supply system including a first phase, a second phase, and a third phase, wherein each meter is connected to one of: the first phase, the second phase, or the third phase of the distribution power supply system; and the load balancing system, as described above.

From a third aspect, the present invention resides in a method of balancing a load comprising obtaining load data from a plurality of meters, each meter connected to at least one device, wherein each meter is connected to one of: a first phase, a second phase, or a third phase of a distribution power supply system; determining a balanced load distribution for the first, second, and third phases of the distribution power supply system based on the load data, wherein the balanced load distribution indicates one of: the first phase, the second phase, or the third phase for each meter to switch connection to; and transmitting balanced load distribution commands including the balanced load distribution to each of the meters, such that each meter switches a phase connection to the distribution power supply system according to the balanced load distribution commands.

The invention also resides in a computer program arranged to perform the above method when run on a computer and such a computer program embodied on a computer readable media.

### BRIEF DESCRIPTION OF THE DRAWINGS

Embodiments of the present invention will now be described, by way of example only, with reference to the accompanying drawings in which:
FIG. 1 shows a block diagram of an illustrative environment and computer infrastructure for implementing one embodiment of the invention.
FIG. 2 shows a block diagram of a system according to one embodiment of the invention.
FIG. 3 shows a block diagram of a system according to one embodiment of the invention.
FIG. 4 shows a block diagram of a system according to one embodiment of the invention.
FIG. 5 shows a flow diagram of embodiments of balancing loads within a system according to one embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

As indicated above, aspects of the invention provide solutions for balancing loads within a power supply system. As used herein, unless otherwise noted, the term "set" means one or more (i.e., at least one) and the phrase "any solution" means any now known or later developed solution.

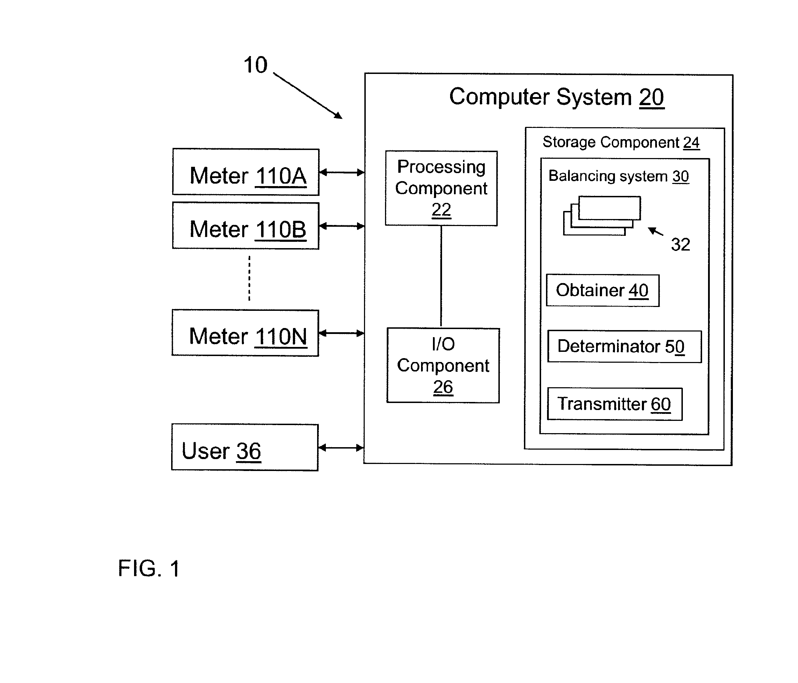

Turning to the drawings, FIG. 1 shows an illustrative environment 10 for balancing loads within a distribution power supply system. To this extent, environment 10 includes a computer system 20 that can perform a process described herein in order to balance the loads within a distribution power supply system. In particular, computer system 20 is shown including a balancing system 30, which makes computer system 20 operable to balance the loads within a distribution power supply system by performing a process described herein.

Computer system 20 is shown in communication with a plurality of meters 110A, 110B, ..., 110N. There may be any number of meters in communication with computer system 20. Further, computer system 20 is shown in communication with user 36. A user may, for example, be a programmer or operator. Interactions between these components and computer system 20 will be discussed in subsequent portions of this application. Computer system 20 is shown including a processing component 22 (e.g., one or more processors), a storage component 24 (e.g., a storage hierarchy), an input/output (I/O) component 26 (e.g., one or more I/O interfaces and/or devices), and a communications pathway 28. In one embodiment, processing component 22 executes program code, such as balancing system 30, which is at least partially embodied in storage component 24. While executing program code, processing component 22 can process data, which can result in reading and/or writing the data to/from storage component 24 and/or I/O component 26 for further processing. Pathway 28 provides a communications link between each of the components in computer system 20. I/O component 26 can comprise one or more human I/O devices or storage devices, which enable user 36 to interact with computer system 20 and/or one or more communications devices to enable user 36 to communicate with computer system 20 using any type of communications link. To this extent, balancing system 30 can manage a set of interfaces (e.g., graphical user interface(s), application program interface, and/or the like) that enable human and/or system interaction with balancing system 30.

In any event, computer system 20 can comprise one or more general purpose computing articles of manufacture (e.g., computing devices) capable of executing program code installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, balancing system 30 can be embodied as any combination of system software and/or application software. In any event, the technical effect of computer system 20 is to provide processing instructions for balancing loads within a power supply distribution system.

Further, balancing system 30 can be implemented using a set of modules 32. In this case, a module 32 can enable computer system 20 to perform a set of tasks used by balancing system 30, and can be separately developed and/or implemented apart from other portions of balancing system 30. Balancing system 30 may include modules 32 which comprise a specific use machine/hardware and/or software. Regardless, it is understood that two or more modules, and/or systems may share some/all of their respective hardware and/or software. Further, it is understood that some of the functionality discussed herein may not be implemented or additional functionality may be included as part of computer system 20.

When computer system 20 comprises multiple computing devices, each computing device may have only a portion of balancing system 30 embodied thereon (e.g., one or more modules 32). However, it is understood that computer system 20 and balancing system 30 are only representative of various possible equivalent computer systems that may perform a process described herein. To this extent, in other embodiments, the functionality provided by computer system 20 and balancing system 30 can be at least partially implemented by one or more computing devices that include any combination of general and/or specific purpose hardware with or without program code. In each embodiment, the hardware and program code, if included, can be created using standard engineering and programming techniques, respectively.

Regardless, when computer system 20 includes multiple computing devices, the computing devices can communicate over any type of communications link. Further, while performing a process described herein, computer system 20 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

As discussed herein, balancing system 30 enables computer system 20 to provide processing instructions for balancing loads within a power supply distribution system. Balancing system 30 may include logic, which may include the following functions: an obtainer 40, a determinater 50, and a transmitter 60. In one embodiment, balancing system 30 may include logic to perform the above-stated functions. Structurally, the logic may take any of a variety of forms such as a field programmable gate array (FPGA), a microprocessor, a digital signal processor, an application specific integrated circuit (ASIC) or any other specific use machine structure capable of carrying out the functions described herein. Logic may take any of a variety of forms, such as software and/or hardware. However, for illustrative purposes, balancing system 30 and logic included therein will be described herein as a specific use machine. As will be understood from the description, while logic is illustrated as including each of the above-stated functions, not all of the functions are necessary according to the teachings of the invention as recited in the appended claims.

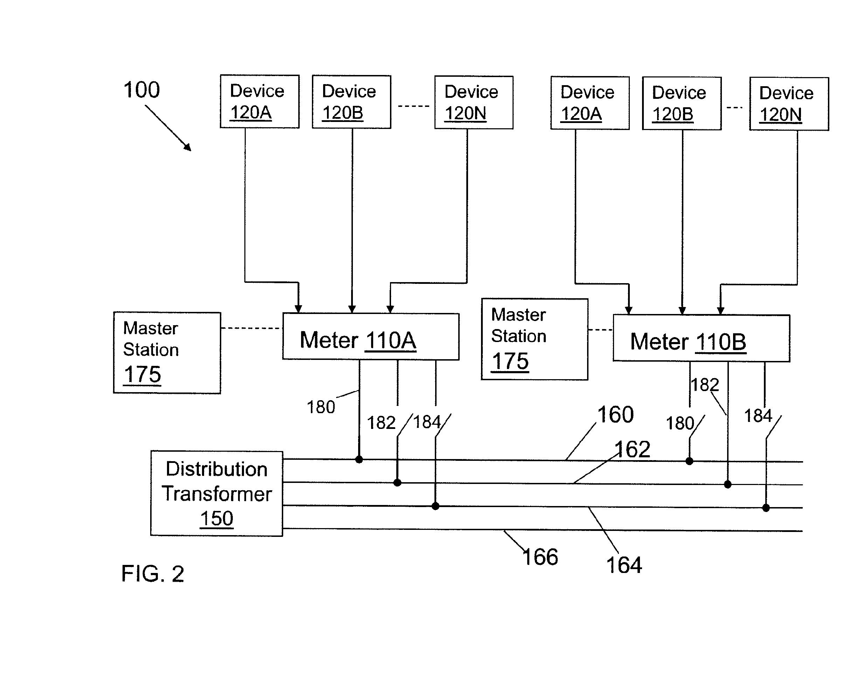

Turning now to FIG. 2, a block diagram of a system 100 according to one embodiment of the invention is shown. System 100 shows a master station 175 in communication with a plurality of meters 110A, 110B. Although only two meters 110A, 110B are shown, it is understood that any number of meters may be in communication with master station 175. As used herein, master station 175 refers to a command center which includes at least all portions of computer system 20 (FIG. 1) in order to determine which phase meter 110A, 110B should be connected to. That is, master station 175 may include obtainer 40, determinator 50, and transmitter 60 of balancing system 30.

Each meter 110A, 110B may be connected to at least one device 120. As shown in FIG. 2, each meter 110A, 110B may be connected to a plurality of devices 120A, 120B, ..., 120N. In operation, master station 175 obtains, by obtainer 40 (FIG. 1), load data from each meter 110A, 110B. Load data may be obtained by any now known or later developed transmitting technology, such as, but not limited to: Wi-Max, power line carrier, broadband over power line, radio frequency, LAN/WAN, AMI, HAN/Zigbee, licensed frequency, unlicensed frequency, or Wi-Fi. Obtainer 40 (FIG. 1) may include an automatic meter reading (AMR) device, as known in the art.

Each meter 110A, 110B may be connected to one of a first phase 160, a second phase 162, or a third phase 164 of a distribution transformer 150. Each meter 110A, 110B may include a first switch 180 configured to connect meter 110A, 110B to first phase 160, a second switch 182 configured to connect meter 110A, 110B to second phase 162, and a third switch 184 configured to connect meter 110A, 110B to third phase 164. At any given moment, only one of first switch 180, second switch 182, or third switch 184 may be turned on. That is, each meter 110A, 110B may only be connected to a single phase (one of: first phase 160, second phase 162, or third phase 164) at a time. For example, in FIG. 2, first switch 180 of meter 110A is turned "on" to connected meter 110A to first phase 160. Further, second switch 182 of meter 110B is turned on to connect meter 110B to second phase 162. Distribution transformer 150 may further comprise a fourth wire 166. Fourth wire 166 is neutral (i.e., ground). Each meter 110A, 110B may be connected to fourth wire 166 (not shown).

Load data of each meter 110A, 110B may include at least one of: the phase meter 110A, 110B is connected to and/or the load of the meter 110A, 110B. As used herein, the term "load" refers to the power consumed by devices 120A, 120B, ..., 120N at meter 110A, 110B.

Master station 175 then may determine, by determinator 50 (FIG. 1), a balanced load distribution for first phase 160, second phase 162, and third phase 164, based on the load data for each meter 110A, 110B. That is, the balanced load distribution indicates either one of: first phase 160, second phase 162, or third phase 164 for each meter 110A, 110B to switch connection to. Determinator 50 (FIG. 1) may determine the balanced load distribution using any now known or later developed analysis, but not limited to: a fuzzy logic analysis, a heuristic analysis, an approximate analysis, or a linearization analysis.

Balanced load distribution commands that include the balanced load distribution may be transmitted by transmitter 60 (FIG. 1) to each meter 110A, 110B. Balanced load distribution may be transmitted by any now known or later developed transmitting technology, such as, but not limited to: Wi-Max, power line carrier, broadband over power line, radio frequency, LAN/Wan, AMI, HAN/Zigbee, licensed frequency, unlicensed frequency, or Wi-Fi. Subsequently, each meter 110A, 110B may switch a phase connection to distribution transformer 150 according to the balanced load distribution commands. That is, for example, in FIG. 2, meter 110A may switch the connection to second phase 162, instead of first phase 160.

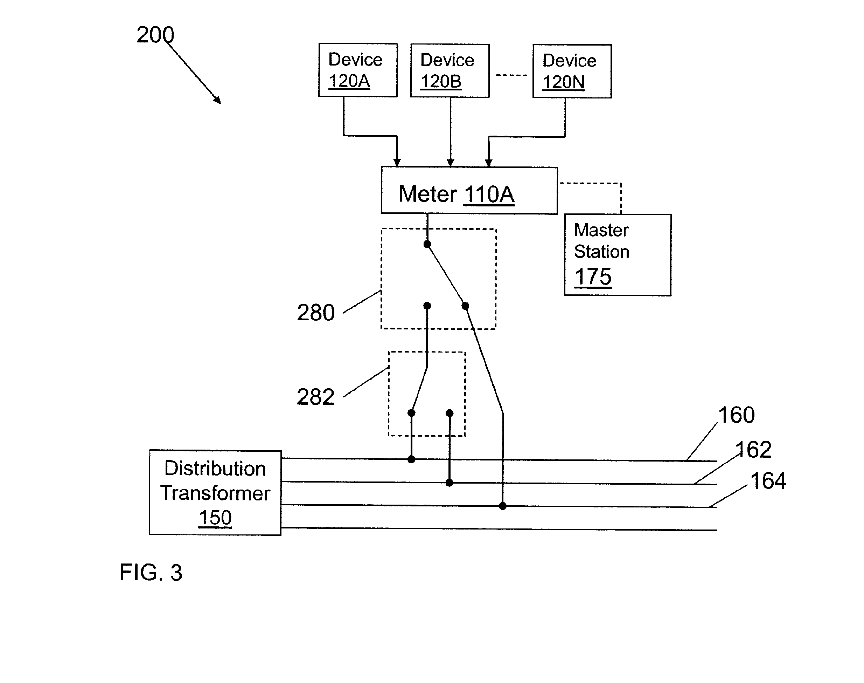

Referring now to FIG. 3, a block diagram of a system 200 according to one embodiment of the invention is shown. Although only one meter 110A is shown, it is understood, as mentioned above, that a plurality of meters may be included in system 200. In this embodiment, meter 110A may be connected to first phase 160, second phase 162, or third phase 164 through two single pole double throw (SPDT) relay switches 280, 282. For example, in FIG. 3, meter 110A is connected to third phase 164 through first switch 280.

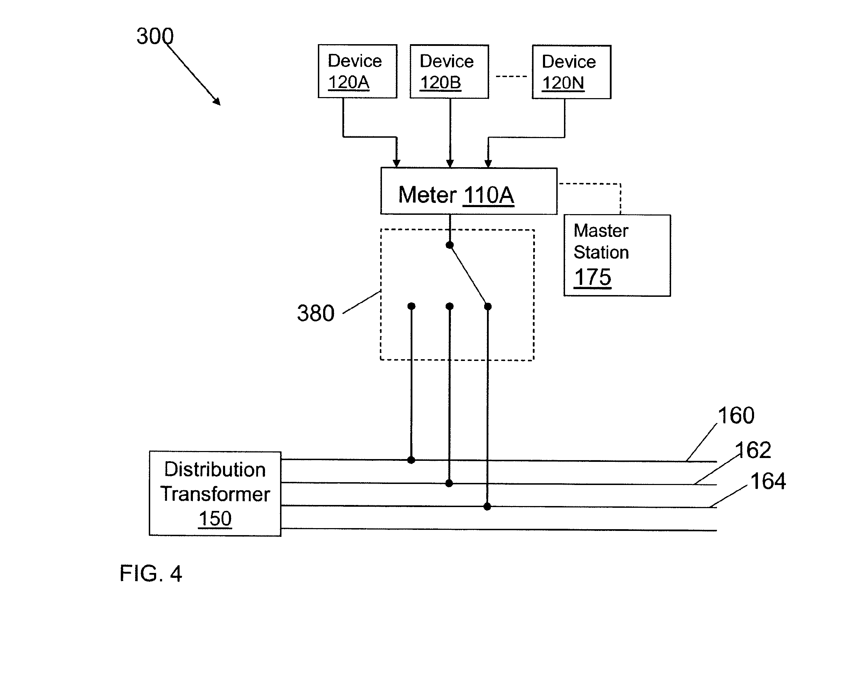

Turning now to FIG. 4, a block diagram of a system 300 according to one embodiment of the invention is shown. Meter 110A may be connected to first phase 160, second phase 162, or third phase 164 through a single three-pole switching relay switch 380.

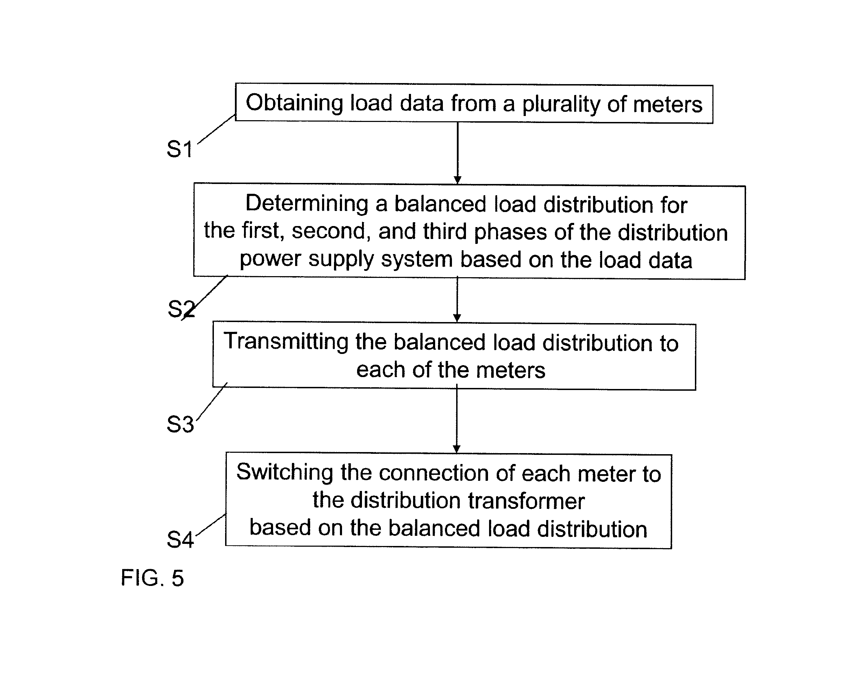

Turning to FIG. 5, a flow diagram of embodiments of balancing loads within a power supply is shown. In step S1, obtainer 40 obtains load data from a plurality of meters 110A, 110B, wherein each meter 110A, 110B is connected to one of: a first phase 160, a second phase 162, or a third phase 164 of a distribution transformer 150. Obtaining load data may include obtaining which phase (first 160, second 162, or third 164) meter 110A, 110B is connected to and the load (i.e., power consumption) of meter 110A, 110B. Load data may be obtained by any now known or later developed transmitting technology, such as, but not limited to: Wi-Max, power line carrier, broadband over power line, radio frequency, LAN/WAN, AMI, HAN/Zigbee, licensed frequency, unlicensed frequency, or Wi-Fi.

In step S2, determinater 50 determines a balanced load distribution for first phase 160, second phase 162, and third phase 164 of distribution transfomer 150 based on the load data. The balanced load distribution indicates one of: first phase 160, second phase 162, or third phase 164, for each meter 110A, 110B to switch connection to. That is, determinator 50 determines which phase meter 110A, 110B should be connected to so that phases 160, 162, 164 of distribution transformer 150 are balanced.

In step S3, transmitter 60 transmits balanced load distribution commands including the balanced load distribution to each meter 110A, 110B. Therefore, each meter 110A, 110B may switch, if needed, which phase 160, 162, 164, meter 110A, 110B should be connected to using first switch 180, second switch 182, and third switch 184 (FIG. 2). Alternatively, meter 110A, 110B may switch using two SPDT relay switches 280, 282 (FIG. 3) or a single three-pole switching relay switch 380 (FIG. 4). In step S4, the method includes switching the connection of each meter 110A, 110B to distribution transformer 150 based on the balanced load distribution commands.

While shown and described herein as a load balancing system, it is understood that aspects of the invention further provide various alternative embodiments. For example, in one embodiment, the invention provides a computer program embodied in at least one computer-readable medium, which when executed, enables a computer system to balance the loads in a power supply system. To this extent, the computer-readable medium includes program code, such as balancing system 30 (FIG. 1), which implements some or all of a process described herein. It is understood that the term "computer-readable medium" comprises one or more of any type of tangible medium of expression capable of embodying a copy of the program code (e.g., a physical embodiment). For example, the computer-readable medium can comprise: one or more portable storage articles of manufacture; one or more memory/storage components of a computing device; paper; and/or the like.

In another embodiment, the invention provides a method of providing a copy of program code, such as balancing system 30 (FIG. 1), which implements some or all of a process described herein. In this case, a computer system can generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program embodied in at least one computer-readable medium. In either case, the set of data signals can be transmitted/received using any type of communications link.

In still another embodiment, the invention provides a method of balancing loads within a power supply system. In this case, a computer system, such as computer system 20 (FIG. 1), can be obtained (e.g., created, maintained, made available, etc.) and one or more modules for performing a process described herein can be obtained (e.g., created, purchased, used, modified, etc.) and deployed to the computer system. To this extent, the deployment can comprise one or more of: (1) installing program code on a computing device from a computer-readable medium; (2) adding one or more computing and/or I/O devices to the computer system; and (3) incorporating and/or modifying the computer system to enable it to perform a process described herein.

It is understood that aspects of the invention can be implemented as part of a business method that performs a process described herein on a subscription, advertising, and/or fee basis. That is, a service provider could offer to provide processing instructions for balancing loads in a power supply system as described herein. In this case, the service provider can manage (e.g., create, maintain, support, etc.) a computer system, such as computer system 20 (FIG. 1), that performs a process described herein for one or more customers. In return, the service provider can receive payment from the customer(s) under a subscription and/or fee agreement, receive payment from the sale of advertising to one or more third parties, and/or the like.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A load balancing system (100, 200, 300) comprising:
an obtainer (40) for obtaining load data from a plurality of meters (110A, 110B), wherein each meter (110A, 110B) is connected to one of: a first phase (160), a second phase (162), or a third phase (164) of a distribution power supply system;
a determinator (50) for determining a balanced load distribution for the first (160), second (162), and third phases (164) of the distribution power supply system based on the load data, wherein the balanced load distribution indicates one of: the first phase (160), the second phase (162), or the third phase (164) for each meter (110A, 110B) to switch connection to; and
a transmitter (60) for transmitting balanced load distribution commands including the balanced load distribution to each of the meters (110A, 110B), such that each meter (110A, 110B) switches a phase connection to the distribution power supply system according to the balanced load distribution commands.

2. The load balancing system (100, 200, 300) of claim 1, wherein each meter (110A, 110B) is connected to at least one device (120A, 120B).

3. The load balancing system (100, 200, 300) of claim 1 or 2, wherein load data includes at least one of: a load of the meter (110A, 110B) and/or a phase the meter (110A, 110B) is connected to.

4. The load balancing system (100, 200, 300) of any of claims 1 to 3, wherein each meter (110A, 110B) includes a first switch (180) configured to connect the meter (110A, 110B) to the first phase (160), a second switch (182) configured to connect the meter (110A, 110B) to the second phase (162), and a third switch (184) configured to connect the meter (110A, 110B) to the third phase (164), such that only one of the first switch (180), second switch (182), and third switch (184) is on.

5. The load balancing system (100, 200, 300) of any of claims 1 to 3, wherein each meter (110A, 110B) includes a first single pole double throw (SPDT) relay switch (280) and a second SPDT relay switch (282) configured to connect the meter (110A, 110B) to one of: the first phase (160), the second phase (162), or the third phase (164).

6. The load balancing system (100, 200, 300) of any of claims 1 to 3, wherein each meter (110A, 110B) includes a single 3-pole switching relay switch (380) configured to connect the meter (110A, 110B) to one of: the first phase (160), the second phase (162), or the third phase (164).

7. The load balancing system (100, 200, 300) of any preceding claim, wherein the obtainer (40) includes an automatic meter reading (AMR) device.

8. The load balancing system (100, 200, 300) of any preceding claim, wherein the determinator (50) determines the balanced load distribution using one of: a fuzzy logic analysis, a heuristic analysis, an approximation analysis, or a linearization analysis.

9. The load balancing system (100, 200, 300) of any preceding claim, wherein the load data is obtained through one of: Wi-Max, power line carrier, broadband over power line, radio frequency, licensed frequency, unlicensed frequency, or Wi-Fi.

10. The load balancing system (100, 200, 300) of any preceding claim, wherein the balanced load distribution commands are transmitted to each of the meters (110A, 110B) through one of: Wi-Max, power line carrier, broadband over power line, radio frequency, licensed frequency, unlicensed frequency, or Wi-Fi.

11. A system comprising:
a plurality of meters, each meter connected to at least one device;
a distribution power supply system including a first phase, a second phase, and a third phase, wherein each meter is connected to one of: the first phase, the second phase, or the third phase of the distribution power supply system; and
the load balancing system of any of claims 1 to 10.

12. A method of balancing a load, the method comprising:
obtaining load data from a plurality of meters, each meter connected to at least one device, wherein each meter is connected to one of: a first phase, a second phase, or a third phase of a distribution power supply system;
determining a balanced load distribution for the first, second, and third phases of the distribution power supply system based on the load data, wherein the balanced load distribution indicates one of: the first phase, the second phase, or the third phase for each meter to switch connection to; and
transmitting balanced load distribution commands including the balanced load distribution to each of the meters, such that each meter switches a phase connection to the distribution power supply system according to the balanced load distribution commands.

13. A computer program comprising computer program code means adapted to perform all the steps of the method of claim 12 when said program is run on a computer.

14. A computer program as claimed in claim 13, embodied on a computer readable media.
